# EUROPEAN PATENT APPLICATION

(11) **EP 4 398 342 A1**
(43) Date of publication of application: **10.07.2024**
(21) Application number: 23821859.8
(22) Date of filing: 30.08.2023
(51) Int. Cl.: H01M 4/36, H01M 4/505, H01M 4/525, H01M 4/485, H01M 4/58, H01M 4/131, H01M 10/0525

(54) **POSITIVE ELECTRODE MATERIAL WITH CORE-SHELL STRUCTURE, PREPARATION METHOD THEREFOR, BATTERY POSITIVE ELECTRODE, AND SECONDARY BATTERY**

(30) Priority: 24.11.2022 CN 202211481334
(71) Applicant: Tianjin B&M Science And Technology Co., Ltd., Tianjin 300384 (CN)
(72) Inventor: CHEN, Dexian, Tianjin 300384 (CN); LI, Qi, Tianjin 300384 (CN); LI, Yihao, Tianjin 300384 (CN); WANG, Huimin, Tianjin 300384 (CN); LIU, Meijing, Tianjin 300384 (CN); LV, Fei, Tianjin 300384 (CN)
(74) Representative: Gill Jennings & Every LLP
(86) International application number: PCT/CN2023/115716
(87) International publication number: WO 2024/109232

(57) **Abstract**

The present application relates to a core-shell structured cathode material, including a core (100) and an outer coating layer (200). Outward from the core, the outer coating layer (200) sequentially includes an electrolyte layer (210) and a reinforcement layer (200) . A material of the core includes a ternary cathode active material. The electrolyte layer includes a metal phosphate salt having a formula of LiₐM1_{b}M2_{c}(PO₄)₃, wherein 0<a<10, 0≤b<10, 0≤c<10, and M1 and M2 are different and each independently selected from Y, Ni, Co, Mn, Zr, Bi, Zn, La, Al, Ti, Ge, W, or Sr. The reinforcement layer includes a carbon nitride.

## Description

### CROSS-REFERENCE TO RELATED APPLICATIONS

This application claims priority of China Patent Application No. 202211481334.6, filed on November 24, 2022, entitled "ANODE MATERIAL WITH CORE-SHELL STRUCTURE, PREPARATION METHOD THEREOF, CATHODE FOR BATTERY, AND SECONDARY BATTERY", the content of which is hereby incorporated by reference in its entirety.

### TECHNICAL FIELD

The present application relates to the technical field of lithium ion batteries, in particular to a core-shell structured cathode material, a preparation method thereof, a battery cathode, and a secondary battery.

### BACKGROUND

The lithium-ion technology has changed the traditional communication modes and the way the portable devices are powered, and is driving a global revolution in transportation and energy supply. In the field of electric vehicles, the cycle life and the high temperature storage performance of the battery are two important indicators for evaluating the performances of the battery and the materials. The cathode active material plays a crucial role in the battery system. Among the existing cathode active material systems, the ternary cathode active material is widely used due to its advantages of high specific energy density and good cycling performance. It is well known that with the charge and discharge of the battery, especially in a high temperature environment, the electrochemical performance of the cathode active material in the battery will have a significant attenuation, and the main reasons can be summarized as the following two aspects. (1) At a high temperature, reactions of Ni⁴⁺ and Li⁺ with the electrolyte liquid can occur at the interface between the electrode and the electrolyte liquid, leading to increase in the both interface impedance and cycling direct current internal resistance (DCR) and resulting in attenuation of the capacity. (2) HF produced by the reaction at the interface between the electrode and the electrolyte liquid can further corrode the interface, leading to the dissolution of Ni/Co/Mn metals from the surface, causing surface lattice reconstruction, and adversely affecting the structure and the electrochemical performance of the material.

Currently, in order to improve the stability of the interface between the electrode and the electrolyte liquid of the battery, the cathode active material is commonly coated with an inert nano-inorganic oxide such as aluminum oxide, magnesium oxide, titanium oxide, or zinc oxide by using a metal oxide coating method, which is a solid-phase method. However, the existing scaled-up coating technology has the following disadvantages. (1) The formed coating layer typically exhibits a dot-like or island-like distribution, with non-uniform interface thickness and incomplete coverage, leading to a poor electrochemical performance of the battery in use at a high temperature. (2) The nano-oxide coating layer obtained by the conventional solid-phase method has a loose structure which is prone to react with HF to form a new exposed interface, leading to dissolution of transition metals and causing continuous structure deterioration and performance attenuation of the interface, and finally reducing the cycling and rate performances of the cathode active material.

The conventional phosphate coating can improve the cyclic stability of the cathode active material, but the rate performance thereof still needs to be improved, and the capacity attenuation thereof after long period cycling still needs to be optimized.

### SUMMARY

In a first aspect of the present application, a core-shell structured cathode material is provided, including a core and an outer coating layer disposed on a surface of the core. Outward from the core, the outer coating layer sequentially includes an electrolyte layer and a reinforcement layer.

A material of the core includes a ternary cathode active material.

The electrolyte layer includes a metal phosphate salt having a formula of LiₐM1_{b}M2_{c}(PO₄)₃, wherein 0<a<10, 0≤b<10, 0≤c<10, and M1 and M2 are different from each other and each independently selected from Y, Ni, Co, Mn, Zr, Bi, Zn, La, Al, Ti, Ge, W, or Sr.

The reinforcement layer includes a carbon nitride having a formula of CⱼNₖ, wherein 0<j<5, and 0<k<5.

In some embodiments, in the core-shell structured cathode material, the reinforcement layer has a porous structure.

In some embodiments, in the core-shell structured cathode material, the ternary cathode active material is selected from the group consisting of lithium nickel cobalt manganese oxide, lithium nickel cobalt aluminum oxide, and any combination thereof.

In some embodiments, in the core-shell structured cathode material, the core has a diameter of 4 µm to 15 µm.

The electrolyte layer has a thickness of 5 nm to 50 nm.

The reinforcement layer has a thickness of 5 nm to 100 nm.

In some embodiments, the core-shell structured cathode material includes one or more of the following features:
(1) the outer coating layer has a total thickness of 10 nm to 100 nm;
(2) 0<a<5, 0<b<5, and 0<c<5;
(3) M1 and M2 are different from each other and each independently selected from Y, Co, Zr, Bi, La, Al, Ti, or W;
(4) 0<j<3, and 0<k<4.

In a second aspect of the present application, a preparation method of a core-shell structured cathode material is provided, including the steps of:
mixing and dispersing a core material in form of particles, a phosphate salt, and water to obtain a base liquid;
adding a metal salt solution to the base liquid and mixing to obtain a precipitate, and drying the precipitate to obtain a pre-coated powder; and
mixing the pre-coated powder, a lithium salt, a carbon source, and an nitrogen source, and heating at 200°C to 800°C to obtain the core-shell structured cathode material.

The core-shell structured cathode material includes a core and an outer coating layer. The outer coating layer sequentially includes an electrolyte layer and a reinforcement layer outward from the core.

The core material includes a ternary cathode active material;

The electrolyte layer includes a metal phosphate salt having a formula of LiₐM1_{b}M2_{c}(PO₄)₃, wherein 0<a<10, 0≤b<10, 0≤c<10, and M1 and M2 are different from each other and each independently selected from Y, Ni, Co, Mn, Zr, Bi, Zn, La, Al, Ti, Ge, W, or Sr.

The reinforcement layer includes a carbon nitride having a formula of CⱼNₖ, wherein 0<j<5, and 0<k<5.

In some embodiments, in the preparation method, a mass ratio of the core material to the phosphate salt is (1000 to 100): 1.

In some embodiments, in the preparation method, the metal salt solution includes a M1 salt and a M2 sal. Amass ratio of the core material to the M1 salt to the M2 salt is 1 :(0.0001 to 0.01):(0.001 to 0.01).

A mass ratio of the core material to the nitrogen source is 1:(0.0005 to 0.5).

In some embodiments, in the preparation method, a molar concentration of phosphate anions in the base liquid is 0.001 mol/L to 0.1 mol/L. A total molar concentration of metal cations in the metal salt solution is 0.001 mol/L to 0.1 mol/L.

In some embodiments, the preparation method includes one or more of the following features:
(1) the phosphate salt includes one or more of ammonium dihydrogen phosphate, diammonium hydrogen phosphate, sodium dihydrogen phosphate, or potassium dihydrogen phosphate;
(2) the lithium salt includes one or more of lithium carbonate, lithium hydroxide, or lithium acetate;
(3) the nitrogen source includes one or more of urea, uric acid, or ammonium fluoride; and
(4) the carbon source includes one or more of urea, uric acid, glucose, caramel, or bitumen.

In a third aspect of the present application, a battery cathode is provided. An active material of the battery cathode is the core-shell structured cathode material in the first aspect of the present application, or the core-shell structured cathode material prepared by the preparation method in the second aspect of the present application.

In a fourth aspect of the present application, a secondary battery is provided, including the battery cathode in the third aspect of the present application, a separator, an anode, and an electrolyte liquid.

In a fifth aspect of the present application, an electrical device is provided, including the secondary battery in the fourth aspect of the present application

In the present application, the outer coating layer is coated on the core of the ternary cathode active material in a suitable manner. Outward from the core, the outer coating layer sequentially includes the electrolyte layer (a main component of which is a metal phosphate slat) and the reinforcement layer (a main component of which is a carbon nitride). In the obtained multi-layer coated composite electrode material, the electrolyte layer has a dense structure and can inhibit the dissolution of transition metals. The reinforcement layer is porous and loose, and can effectively increase the compatibility of the interface with the electrolyte liquid and the wettability of the electrode. As a result, the cycling and rate performances of the battery can be improved.

The core-shell structured cathode material of the present application, on the one hand, can form an effective and stable interface between the electrode and the electrolyte liquid, which reduces the corrosion and the structural damage on the interface of the material, thereby reducing the increase in DCR and improving the cycling and rate performances of the battery, and on the other hand, can effectively isolate the electrode material from the electrolyte liquid, thereby significantly decreasing the interface defects due to the corrosion by HF, and increasing the first cycle discharge capacity of the battery to a certain extent.

The core-shell structured cathode material of the present application can be prepared by a simple method, is easy to realize large-scale production, has a high coating strength, can remain intact during an electrode rolling process, and can effectively prevent excessive metal dissolution.

### BRIEF DESCRIPTION OF THE DRAWINGS

In order to illustrate the embodiments of the present application or the technical solution in the conventional technology more clearly, the drawings used in the description of the embodiments of the present application or of the conventional technology will be described briefly. Apparently, the following described drawings are merely embodiments of the present application, and other drawings can be derived by one of ordinary skill in the art without any creative effort.
FIG. 1 is a schematic structural view of a core-shell structured cathode material according to an embodiment of the present application.
FIG. 2 is a flow chart of the preparation of a core-shell structured cathode material according to an embodiment of the present application.
FIG. 3 is a transmission electron microscopy (TEM) image of Example 1 of the present application.
FIG. 4 is an energy disperse spectroscopy (EDS) image of the material obtained in Example 1 of the present application.
FIG. 5 shows a comparison of transmission electron microscopy (TEM) images of materials obtained in Comparative Example 1 and Example 1 of the present application.
FIG. 6 shows a comparison of X-ray diffraction (XDR) spectra of materials obtained in Comparative Example 1 and Examples 1 to 2 of the present application.
FIG. 7 shows a comparison of cycling performances of materials obtained in Examples 1 to 2 of the present application and Comparative Examples 1 to 2.
FIG. 8 shows a comparison of rate performances of materials obtained in Examples 1 to 2 of the present application and Comparative Examples 1 to 2.

### DETAILED DESCRIPTION

The present application is further described below in conjunction with the embodiments, examples, and accompanying drawings. It should be understood that these embodiments are only used to explain the present application and not to limit the scope of the present application. It should be understood that after reading the contents of the present application, those skilled in the art may make various changes or modifications to the present application, and these equivalent forms also fall within the scope defined by the appended claims of the present application.

Unless otherwise defined, all technical and scientific terms used herein have the same meaning as commonly understood by one of ordinary skill in the technical field of the present application. The terms used herein in the description of the present application are only for the purpose of describing specific embodiments, and are not intended to limit the present invention.

### Terms

Unless otherwise stated or there is a contradiction, the terms or phrases used herein have the following meanings.

In the present application, the terms such as "preferably", "more preferably", and "most preferably" are only for describing the embodiments or examples with beneficial effects, but should not be construed as limiting the scope of protection of the present application.

In the present application, the terms such as "further", "yet further", and "in particular" are only for descriptive purposes to indicate differences in content, but should not be construed as limiting the scope of protection of the present application.

In the present application, the terms such as "first", "second", "third", "fourth", and "fifth" in phrases such as "first aspect", "second aspect", "third aspect", "fourth aspect", and "fifth aspect" are only for descriptive purposes and are not intended to indicate or imply relative importance or number or to imply the importance or number of indicated technical features. In addition, the terms such as "first", "second", "third", "fourth", and "fifth" serve only non-exhaustively enumerative and descriptive purposes, but should not be construed as constituting a closed limitation on number.

In the present application, an open-end description for the technical features includes not only a close-ended technical solution consisting of the recited technical features, but also an open-ended technical solution including the recited technical features.

In the present application, when a numerical interval (i.e., a numerical range) is involved, unless otherwise specifically stated, the distribution of optional numerical values in the numerical interval is considered continuous, and the two numerical endpoints (i.e., the minimum value and the maximum value) of the numerical range as well as each numerical value between the two numerical endpoints are included. Unless otherwise specifically stated, when a numerical range is directed only to integers within the numerical range, the two endpoint integers of the numerical range as well as each integer between the two endpoints are included. Furthermore, when multiple ranges are provided to describe the feature or characteristic, the ranges may be combined. In other words, unless otherwise specifically stated, the ranges disclosed herein are to be construed as including any and all sub-ranges subsumed therein.

In the present application, when a temperature parameter is involved, unless otherwise specifically stated, not only a thermostatic process but also a variation within a certain temperature interval is allowed. It should be understood that the thermostatic process allows for temperature fluctuations within the accuracy of the instrument. Fluctuations are allowed within, for example, ±5°C, ±4°C, ±3°C, ±2°C, and ±1°C.

In the present application, the weight may be in µg, mg, g, kg or other mass units well known in the chemical industry.

In the present application, unless otherwise specifically defined, the molecular weight is the average molecular weight, and further, refers to the weigh-average molecular weight.

In a first aspect of the present application, a core-shell structured cathode material is provided, including a core made of a ternary cathode active material, and an electrolyte layer (a main component of which is a metal phosphate salt) and a reinforcement layer (a main component of which is a carbon nitride) sequentially coated on the core. The electrolyte layer has a dense structure, which can inhibit the dissolution of transition metals. The reinforcement layer is porous and loose, which can effectively increase the compatibility of the interface with the electrolyte liquid and the wettability of the electrode. As a result, the material can have high cycling and rate performances.

In the present application, unless otherwise defined, the term "main component" refers to a component primarily included. For example, the mass fraction of the component is greater than 80%, greater than 85%, greater than 90%, greater than 95%, greater than 96%, greater than 97%, greater than 98%, greater than 99%, etc. In some embodiments, the term "main component" may also refer to a component with a mass fraction of 100%. It should be understood that other components may also be present, such as unavoidable impurities or component variations due to the preparation method, as well as transitional regions due to contact and penetration of adjacent structural layers. By considering the examples of preparation methods provided by the third aspect of the present application, those skilled in the art would clearly understand the distribution and connection of various structural layers, as well as the meaning of "main component".

The core-shell structured cathode material in the present application includes the core and an outer coating layer disposed on a surface of the core. Outward from the core, the outer coating layer sequentially includes the electrolyte layer and the reinforcement layer. The term "sequentially includes" indicates only the positional order, and does not impose any limitation on whether the relevant structural layers are in direct contact. For example, an additional functional layer, such as a fixing layer for improving the bonding force between the electrolyte layer and the reinforcement layer, may be further coated between the electrolyte layer and the reinforcement layer.

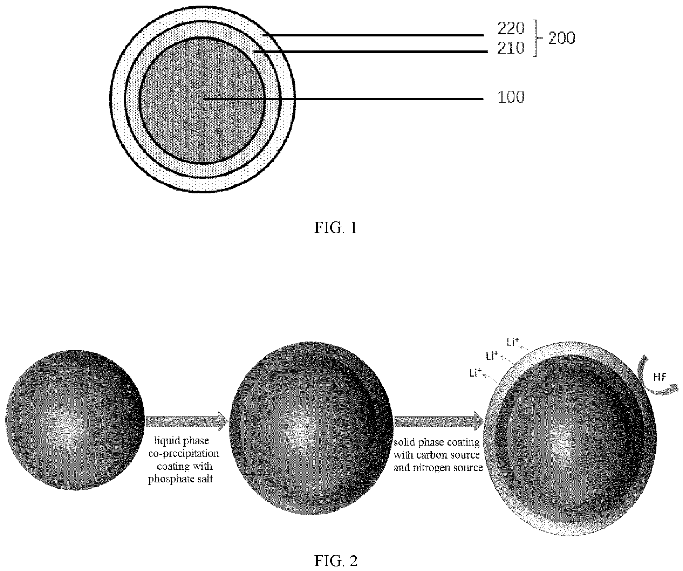

FIG. 1 shows a schematic structural view of a core-shell structured cathode material according to an embodiment of the present application. The cathode material includes a core 100, and an electrolyte layer 210 and a reinforcement layer 220 sequentially coated outward from the core. The electrolyte layer 210 and the reinforcement layer 220 collectively form an outer coating layer 200. On the one hand, the electrolyte layer is relatively dense, so it can effectively isolate the electrode interface from the electrolyte liquid, thereby inhibiting the corrosion of the interface by HF. On the other hand, the electrolyte layer can provide a high level of electrical conductivity and improve the rate performance of the material. The reinforcement layer has a relatively loose structure, which can increase the compatibility of the electrode with the electrolyte liquid. As a result, the liquid retaining capability of the electrode is improved by about 15% compared to the traditional coated material.

In some embodiments, the material of the core is selected from one or both of lithium nickel cobalt manganese oxide and lithium nickel cobalt aluminum oxide. As an example, the lithium nickel cobalt manganese oxide is specifically a compound of LiNiₓCo_{y}Mn_{1-x-y}O₂, wherein 0<x<1, 0<y<1.

In some embodiments, the electrolyte layer includes a metal phosphate salt having a formula of LiₐM1_{b}M2_{c}(PO₄)₃. Further, 0<a<10, 0≤b<10, and 0≤c<10. Furthermore, 0<a<5, 0<b<5, and 1<c<5.

In some embodiments, M1 and M2 are different from each other and each independently selected from Y, Ni, Co, Mn, Zr, Bi, Zn, La, Al, Ti, Ge, W, or Sr. Further, M1 and M2 are different from each other and each independently selected from Y, Co, Zr, Bi, La, Al, Ti, or W.

In some embodiments, the reinforcement layer includes a carbon nitride having a formula of CⱼNₖ. Further, 0<j<5, 0<k<5. Furthermore, 0<j<3, 0<k<4.

In the present application, the core of the core-shell structured cathode material has a suitable particle size. An over small particle size of the core may lead to an over low energy density of the core, whereas an over large particle size of the core may result in insufficient compactness of the electrode plate. In some embodiments, the particle size of the core is 4 µm to 15 µm. As an example, the particle size can be 4 µm, 5 µm, 6 µm, 7 µm, 8 µm, 9 µm, 10 µm, 11 µm, 12 µm, 13 µm, 14 µm, 15 µm, etc.

In the present application, unless otherwise specifically defined, the terms such as size, particle size, and diameter generally refer to the average value. In the present application, the terms "particle size" and "particle diameter" have the same definition, all representing the average particle diameter of spherical or spheroidal particles.

The outer coating layer of the core-shell structured cathode material in the present application has a suitable thickness, which is advantageous for achieving optimal electrochemical performance of the material, effectively avoiding the failure to isolate the electrode from the electrolyte liquid at the interface caused by an over thin (e.g., 4 nm) coating layer, and avoiding the instability of the phase interface caused by an over thick (e.g., 60 nm) coating layer.

In some embodiments, the thickness of the outer coating layer is 5 nm to 50 nm. For example, the thickness can be 5 nm, 10 nm, 15 nm, 20 nm, 25 nm, 30 nm, 35 nm, 40 nm, 45 nm, 50 nm, etc. Other specific values within the above range can also be selected and will not be listed individually.

Further, the thickness of the electrolyte layer is 5 nm to 50 nm.

Further, the thickness of the reinforcement layer is 5 nm to 50 nm.

As an example, the thicknesses of the electrolyte layer and the reinforcement layer can each independently be 5 nm, 10 nm, 15 nm, 20 nm, 25 nm, 30 nm, 35 nm, 40 nm, 45 nm, 50 nm, etc.

In some embodiments, a mass ratio of the outer coating layer to the core of the core-shell structured cathode material can be 1: (100 to 1000). For example, the mass ratio can be 1:100, 1:200, 1:300, 1:400, 1:500, 1:600, 1:700, 1:800, 1:900, 1:1000, etc.

In a second aspect of the present application, a method for preparing the core-shell structured cathode material is provided, which is simple to operate and easy to achieve large-scale production.

In the present application, an outer coating layer is coated on a core (a main component of which is a ternary cathode active material) in a suitable manner (i.e., in-situ coating technology). The outer coating layer has a relative high coating strength and is able to remain intact in an electrode rolling process. Outward from the core, the outer coating layer includes at least an electrolyte layer which is dense in structure and includes a metal phosphate salt as a main component thereof and a reinforcement layer which is porous and loose and includes a carbon nitride as a main component thereof. The phosphate salt (LiₐM_{b}N_{c}(PO₄)₃) in the electrolyte layer is electrochemically active and capable of releasing Li⁺ ions for ion exchange during the first cycle, which increases the discharge capacity in the first cycle to a certain extent. The reinforcement layer which is porous and loose can effectively increase the compatibility of the interface with the electrolyte liquid and the wettability of the electrode. As a result, the cycling and rate performances of the material can be effectively improved.

In some embodiments of the present application, the method for preparing the core-shell structured cathode material including steps of:
S100, mixing and dispersing a core material in form of particles, a phosphate salt, and water to obtain a base liquid;
S200, adding a metal salt solution to the base liquid and mixing to obtain a precipitate, and drying the precipitate to obtain a pre-coated powder; and
S300, mixing the pre-coated powder, a lithium salt, a carbon source, and an nitrogen source, and heating at 200°C to 800°C (specifically, for example, 200°C, 300°C, 400°C, 500°C, 600°C, 700°C, 800°C, etc.) to obtain the core-shell structured cathode material.

In the above preparation, in step S100, the core material particles are dispersed into a solution environment containing a large amount of phosphate anions. Then in step S200, metal (M1 and M2) cations are introduced and react with the phosphate anions in a precipitation reaction to produce a phosphate layer on the core material particle, thereby obtaining the pre-coated powder. Then in step S300, the pre-coated powder, the lithium salt, the carbon source, and the nitrogen source are mixed and heated at a suitable temperature so that the lithium metal is introduced into the phosphate layer obtained in step S200 to obtain the dense electrolyte layer, and at the same time the carbon source and the nitrogen source form the porous and loose reinforcement layer on the surface of the electrolyte layer. The specific preparation process can also be referred to FIG. 2.

### S100, Preparation of Base Liquid

In the present application, in step S100, the core material (i.e., the ternary cathode active material) in form of particles is dispersed into an environment containing a large amount of phosphate anions to obtain the base liquid.

In some embodiments, a mass ratio of the core material to the phosphate salt is (1000 to 100):1, specifically, for example, 1000:1, 900:1, 800:1, 700:1, 600:1, 500:1, 400:1, 300: 1, 200: 1, 100:1, etc.

The core material is commercially available or can be prepared by any conventional method known to those skilled in the art.

Optionally, the core material can be nickel cobalt manganese oxide, in which case the lithium salt in step S300 acts as a lithium source to prepare the ternary cathode active material matrix. The core material can alternatively be lithium nickel cobalt manganese oxide, in which case the lithium salt in step S300 acts as a lithium replenisher, i.e., a lithium-replenishing lithium salt.

During the formation of the lithium ion battery, a large amount of active lithium will be consumed in the formation of the solid electrolyte interface (SEI) film on the anode, especially when a certain amount of high-capacity silicon-based anode material is added, resulting in low first cycle coulombic efficiency and capacity of the battery. Replenishing active lithium is an effective method to solve this problem. Replenishing lithium by cathode refers to addition of a lithium-containing compound with a high irreversible capacity to the cathode of the lithium-ion battery. The lithium-containing compounds with the high irreversible capacity, depending on the nature thereof, can be classified into: binary lithium-containing compounds such as Li₂O, Li₂O₂, and Li₂S, ternary lithium-containing compounds such as Li₆CoO₄ and Li₅FeO₄, and organic lithium-containing compounds such as Li₂DHBN and Li₂C₂O₄.

As an example, the core material (lithium nickel cobalt manganese oxide) can be prepared by the following steps. A precursor (nickel cobalt manganese oxide, NiₓCo_{y}Mn_{1-x-y}(OH)₂, 0<x<1, 0<y<1) and a lithium source are mixed uniformly and heated under an atmosphere of oxygen and/or air. The temperature of the heating can be 400°C to 1000°C, for example, 400°C, 500°C, 600°C, 700°C, 800°C, 900°C, 1000°C, etc. The time of the heating can be 8 hours (h) to 30 h, for example, 8 h, 12 h, 14 h, 16 h, 18 h, 20 h, 22 h, 24 h, 26 h, 28 h, 30 h, etc. Other point values within the above numerical range can also be selected and will not be listed individually herein.

In some embodiments, before being added and mixed with the phosphate salt and the water, the core material particles can be pulverized to a particle size of 4 µm to 15 µm, specifically, for example, 4 µm, 5 µm, 8 µm, 10 µm, 12 µm, 15 µm, etc.

In some embodiments, after the core material particles are added and mixed with the phosphate salt and the water, and dispersed therein, the pH value of the base liquid is regulated to a range of 4 to 9, for example, 4, 5, 6, 7, 8, 9, etc. In step S200, the precipitation reaction of the phosphate anions with the metal cations is carried out when the pH value is around 7 to produce the in-situ-coated material Mₓ(PO₄)_{y}Nₘ(PO₄)ₙ. Optionally, the pH value can be regulated to a range of 4 to 9 (e.g., 4, 5, 6, 7, 8, 9, etc.) by adding acetic acid or aqueous ammonia. Further, the concentration of the acetic acid or aqueous ammonia can be 0.08 mol/L to 0.12 mol/L, specifically, for example, 0.08 mol/L, 0.09 mol/L, 0.1 mol/L, 0.11 mol/L, 0.12mol/L, etc.

In some embodiments, the molar concentration of the phosphate anions in the base liquid is 0.001 mol/L to 0.1 mol/L, specifically, for example, 0.001 mol/L, 0.005mol/L, 0.01mol/L, 0.02mol/L, 0.05mol/L, 0.08mol/L, 0.1mol/L, etc.

In some embodiments, the phosphate salt is selected from the group consisting of ammonium dihydrogen phosphate, diammonium hydrogen phosphate, sodium dihydrogen phosphate, potassium dihydrogen phosphate, and combinations thereof.

### S200, Preparation of Pre-coated Powder

In the present application, the metal (M1 and M2) cations introduced in step S200 react with the phosphate anions in the base liquid obtained in step S100 in the precipitation reaction to produce the phosphate layer on the core material particle, thereby obtaining the pre-coated powder.

In some embodiments, the metal salt solution is added to the base liquid and mixed with the base liquid to obtain the precipitate. The precipitate is dried to obtain the pre-coated powder.

In some embodiments, the metal salt solution contains an M1 salt and an M2 salt. Further, the mass ratio of the core material to the M1 salt to the M2 salt can be 1:(0.0001 to 0.01):(0.001 to 0.01), specifically, for example,1:0.0001:0.001, 1:0.001:0.001, 1:0.01:0.001, 1:0.0001:0.005, 1:0.0001:0.01, etc.

In some embodiments, the total molar concentration of the metal cations in the metal salt solution is 0.001 to 0.1 mol/L, specifically, for example, 0.001 mol/L, 0.005 mol/L, 0.01 mol/L, 0.02 mol/L, 0.05 mol/L, 0.08mol/L, 0.1mol/L, etc.

In some embodiments, the metal salt solution can be prepared by an conventional method known to those skilled in the art. Specifically, the soluble M1 salt and the soluble M2 slat are dissolved into water and left to stand for 12h to 20h after the complete dissolution. Specifically, the time of standing is more than 12h to ensure that M1 and M2 elements are dispersed uniformly in the aqueous solution. In some embodiments, M1 and M2 are different from each other and each independently selected from Ni, Co, Mn, Zr, Bi, Zn, La, Al, Ti, Ge, W, or Sr. Further, M1 and M2 are different and each independently selected from Y, Co, Zr, Bi, La, Al, Ti, or W. Optionally, the metal salt solution can be one or more of a chloride salt solution, a sulfate salt solution, or an oxalate salt solution.

In the present application, in step S200, the metal salt solution can be added to the base liquid by any method known to those skilled in the art. In some embodiments, the addition method includes: continuously introducing the metal salt solution to the base liquid at a certain rate with a peristaltic pump. In this way, the rate at which the M1 and M2 elements are introduced into the base liquid can be effectively controlled so as to control the thickness of the coating layer. Further, the introducing rate can be 0.4 mL/min to 0.6 mL/min, for example, 0.5 mL/min. The introducing rate can also be, for example, 0.4 mL/min, 0.45 mL/min, 0.5 mL/min, 0.55 mL/min, 0.6 mL/min, etc. Other point values within the above numerical range can also be selected and will not be listed individually herein.

In the present application, the method of drying the precipitate in step S200 is not specifically limited. The drying can be performed at 80°C in a rotary evaporator. Further, the time of drying can be 4h to 6h.

### S300, Preparation of Core-shell Structured Cathode material

In step S300, the pre-coated powder obtained in step S200, the lithium salt, the carbon source, and the nitrogen source are mixed and heated at a suitable temperature, allowing the lithium salt reacting with the phosphate salt (M1_{b}M2_{c}(PO₄)₃) in the pre-coated powder to produce a lithium-containing metal phosphate salt (LiₐM1_{b}M2_{c}(PO₄)₃), which has a high electrical conductivity and can significantly improve the electrochemical performance of the material. At the same time, the carbon source and the nitrogen source form the porous and loose reinforcement layer on the surface of the electrolyte layer. In some embodiments, the lithium salt further plays a role in replenishing lithium, which can react with the component of the core. The specific principle of replenishing lithium has been described above in relation to the step S100.

Optionally, the lithium salt can be one or more of lithium carbonate, lithium hydroxide, or lithium acetate. The term "more" in the present application refers to two or more than two.

Optionally, the nitrogen source can be one or more of urea, uric acid, or ammonium fluoride.

Optionally, the carbon source can be one or more of urea, uric acid, glucose, caramel, or bitumen.

In some embodiments, the carbon source and the nitrogen source can be the same compound which provides both carbon and nitrogen elements in step S300.

In some embodiments, the mass ratio of the core material to the nitrogen source is 1:(0.0005 to 0.5), specifically, for example, 1:0.0005, 1:0.001, 1:0.005, 1:0.01, 1:0.05, 1:0.1, 1:0.2, 1:0.3, 1:0.4, 1:0.5, etc.

In some embodiments, the mass of the lithium salt added in step S300 is 0.1% to 10%, specifically, for example, 0.1%, 0.5%, 1%, 2%, 3%, 4%, 5%, 6%, 7%, 8%, 9%, 10%, etc., of the mass of the core material in step S100.

In some embodiments, the temperature of heating in step S300 can be 200°C to 800°C. As an example, the temperature of heating can be 200°C, 300°C, 400°C, 500°C, 600°C, 700°C, 800°C, etc. The time of heating can be 5 h to 30 h, for example, 5 h, 10 h, 15 h, 20 h, 25 h, 30 h, etc.

In a third aspect of the present application, a battery cathode is provided. An active component of the cathode is the core-shell structured cathode material provided in the first aspect of the present application, or the core-shell structured cathode material prepared by the method provided in the second aspect of the present application.

In a fourth aspect of the present application, a secondary battery is provided. The secondary battery includes the battery cathode provided in the third aspect of the present application, a separator, an anode, and an electrolyte liquid. The secondary battery of the present application has better rate performance and cycling stability. In some embodiments, the secondary battery made from the material of the present application has a specific capacity increased by ≥ 10%, a cycle performance increased by ≥ 10%, and a rate performance increased by ≥10%, as compared to the secondary battery made from the coated material prepared by the conventional solid phase method.

In a fifth aspect of the present application, an electrical device is provided. The electrical device includes the second battery provided in the fourth aspect of the present application.

Some specific examples are described below.

The raw materials and the reagents involved in the following specific examples are commercially available or can be prepared by any method known to those skilled in the art.

### 1. Preparation of Core-shell Structured Cathode material

### Example 1

### (1) Preparation of Core material

A metal oxide (Ni_{0.6}Co_{0.1}Mn_{0.3}(OH)₂, available from Aladdin Chemical Reagent Company, with a particle size of 4 µm) and lithium hydroxide as raw materials were mixed uniformly at a ratio such that the molar ratio of Li/(Ni+Mn) in the mixture was 1.04: 1, and heated at 940°C for 15 hours under an atmosphere of oxygen in a chamber furnace. The product was pulverized between a pair of rollers (with an upper space of 15 cm and a lower space of 5 cm), thereby obtaining a core material in form of particles, with a chemical formula of LiNi_{0.6}Co_{0.1}Mn_{0.3}O₂.

### (2) Preparation of Base liquid

The core material (50 g) was weighted, and added and mixed with a phosphate salt (1 g) and water (100 mL). The pH value of the mixed liquid was regulated to 6.1 with acetic acid, stirred for 1 h, and left to stand for 12 h, thereby obtaining a base liquid.

### (3) Preparation of Pre-coated Powder

A metal salt solution was prepared by the following steps. Aluminum chloride (0.1151 g) and titanium dichloride (0.2784 g) were dissolved in deionized water (20 mL), stirred for 1 h, and left to stand for 12 h.

The prepared metal salt solution was conveyed to the base liquid with a peristaltic pump at a conveying rate of 0.5 mL/min, thereby obtaining a precipitate. The precipitate was transferred to a rotary evaporator and dried at 80°C for 5 h, thereby obtaining a pre-coated powder.

### (3) Preparation of Core-shell Structured Cathode material (LiNi_{0.6}Co_{0.1}Mn_{0.3}O₂@Li_{1.3}Al_{0.3}Ti_{1.7}(PO₄)₃ &C₃N₄)

The pre-coated powder (20g), a lithium-replenishing lithium salt (lithium hydroxide, 0.0933 g), and urea (0.2 g) were mixed and heated at 450°C under an atmosphere of a protective gas for 20 h.

### Example 2

A core-shell structured cathode material (LiNi_{0.6}Co_{0.1}Mn_{0.3}O₂@Li_{1.3}Al_{0.3}Ge_{1.7}(PO₄)₃&C₃N₄) was prepared by a method substantially the same as Example 1, except that in the step of preparing the base liquid, the metal salt solution was prepared by the following steps: aluminum chloride (0.1151 g) and germanium chloride (0.3658 g) were dissolved in deionized water (20 mL), stirred for 1 h, and left to stand for 12 h.

### Example 3

A core-shell structured cathode material (LiNi_{0.65}Co_{0.07}Mn_{0.28}O₂@Li_{1.3}Y_{0.3}Ge_{1.7}(PO₄)₃&C₃N₄) was prepared by a method substantially the same as Example 2, except that in the step of preparing the core material, the metal oxide used as the raw material is Ni_{0.60}Co_{0.07}Mn_{0.28}(OH)₂ (available from Aladdin Chemical Reagent Company, with a particle size of 4 µm), and in the step of preparing the base liquid, the metal salt solution was prepared by the following steps: yttrium sulfate (0.2551 g) and germanium acetate (0.3858 g) were dissolved in deionized water (20 mL), stirred for 1 h, and left to stand for 12 h.

### Comparative Example 1

An unmodified and uncoated ternary cathode material (LiNi_{0.6}Co_{0.1}Mn_{0.3}O₂) was prepared in this comparative example. The specific steps were as follows.

A core material was prepared by a method exactly the same as Example 1. The core material was sintered at 450°C under an atmosphere of air for 15 h.

### Comparative Example 2

A ternary cathode material (LiNi_{0.6}Co_{0.1}Mn_{0.3}O₂@Al₂O₃) was prepared in this comparative example, involving a conventional dry method for the coating. The specific steps were as follows.

A core material was prepared by a method exactly the same as Example 1. The core material (2.5 kg) and nanosized aluminum oxide (8 g) were mixed uniformly and sintered at 450°C under an atmosphere of air in a chamber furnace for 15 h.

### Comparative Example 3

A ternary cathode material (LiNi_{0.6}Co_{0.1}Mn_{0.3}O₂@TiO₂) was prepared in this comparative example, involving a conventional dry method for the coating. The specific steps were as follows.

A core material was prepared by a method exactly the same as Example 1. The core material (2.5 kg) and nanosized titanium dioxide (10 g) were mixed uniformly and sintered at 450°C under an atmosphere of air in a chamber furnace for 15 h.

### Comparative Example 4

A ternary cathode material (LiNi_{0.6}Co_{0.1}Mn_{0.3}O₂@GeO₂) was prepared in this comparative example, involving a conventional dry method for the coating. The specific steps were as follows.

A core material was prepared by a method exactly the same as Example 1. The core material (2.5 kg) and nanosized germanium dioxide (10 g) were mixed uniformly and sintered at 450°C under an atmosphere of air in a chamber furnace for 15 h.

### 2. Morphology Test

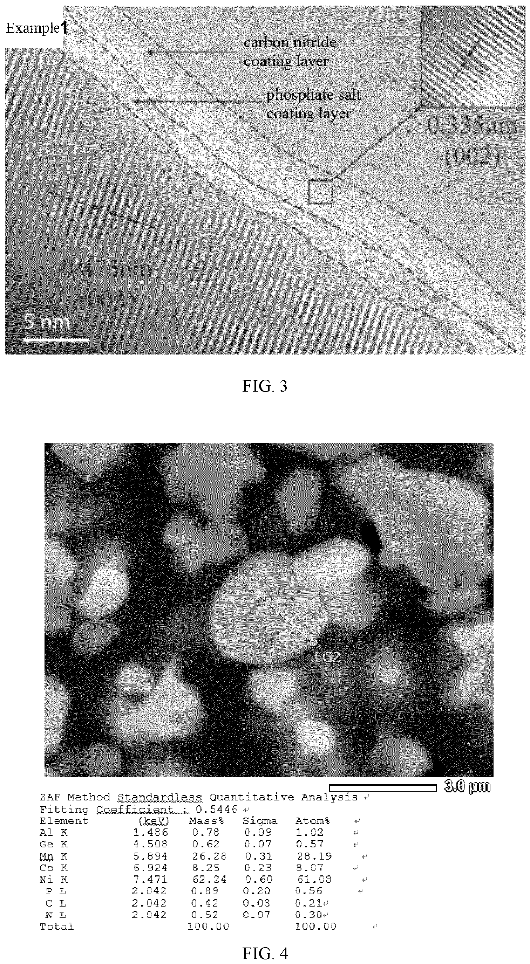

The morphology of the cathode material (LiNi_{0.6}Co_{0.1}Mn_{0.3}O₂@Li_{1.3}Al_{0.3}Ti_{1.7}(PO₄)₃&C₃N₄) obtained in Example 1 was characterized by a transmission electron microscopy (TEM), and the TEM image obtained is shown in FIG. 3. It can be seen from FIG. 3 that a coating layer with a double-layer structure is present and the thickness of the coating layer is about 10 nm. Through the lattice comparison, it can be found that the outer layer of the coating layer is a nitrogen-containing graphite compound (i.e., carbon nitride having a formula of CⱼNₖ).

The cathode material obtained in Example 1 was characterized by an energy dispersive spectrometer, and the EDS image obtained is shown in FIG. 4. It can be seen from FIG. 4 that elements such as Al, Ti, P, C, and N were detected at the surface of the material, suggesting that the phosphate salt and the carbon nitride compounds have been successfully coated on the surface of the material.

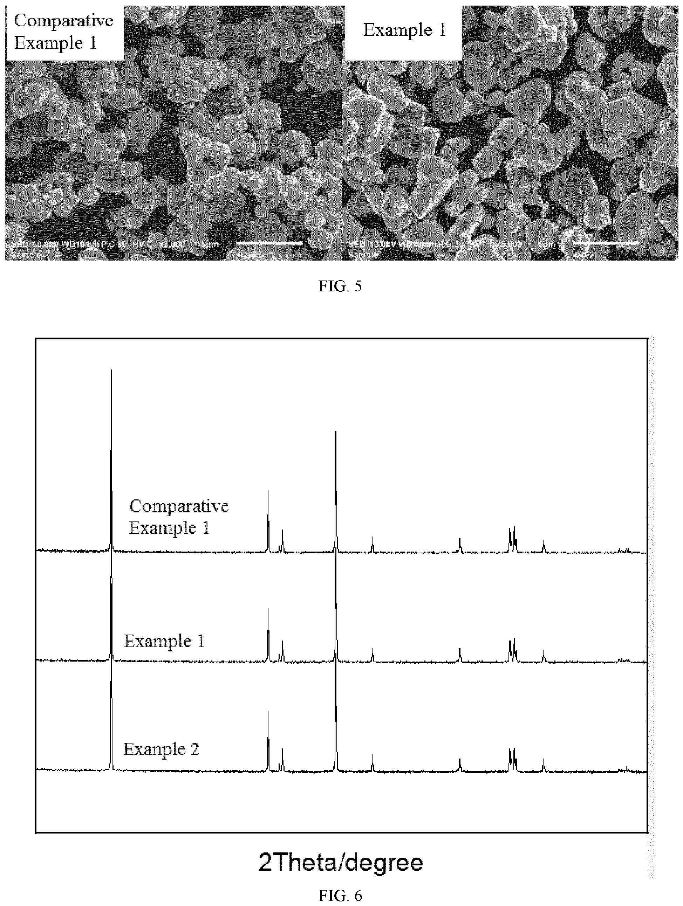

The morphologies of the cathode material obtained in Comparative Example 1 and the cathode material (LiNi_{0.6}Co_{0.1}Mn_{0.3}O₂@Li_{1.3}Al_{0.3}Ti_{1.7}(PO₄)₃&C₃N₄) obtained in Example 1 were characterized by a scanning electron microscope, and a comparison of the SEM images obtained is shown in FIG. 5. It can be seen from FIG. 5 that compared to the uncoated cathode material, the surface of the material obtained in Example has an obvious coating layer structure, the outer layer of the coating layer is relatively loose, while the inner layer of the coating layer is relatively dense in structure, and the overall coating effect is good.

### 3. Characterization of Structure Feature

The cathode active materials obtained in various examples and comparative examples were cycled for 50 times at a voltage of 2.8V to 4.4V and a rate of 0.1C/0.1C. Then the cathode active materials in form of powder after cycles were placed onto a sample platform of an XRD instrument (model Bruker D8) and scanned at a scan rate of 1°/min and a scan angle of 10° to 80° to respectively obtain X-ray diffraction (XRD) spectra. The XRD comparison is shown in FIG. 6.

It can be seen from FIG. 6 that as compared to Comparative Example 1, no impurity peak appeared for the samples of Examples after 100 cycles, suggesting no change in the crystal structure of the cathode material after the coating. In addition, the structure of the material had a good stability, as there was no structural variation.

The above XRD data were processed. The processing method included refining the XRD data by the Rietveld method. The refined data were obtained and shown in Table 3-1 below.

**Table 3-1**

| Group | Θ(003) | FWHN(104) | I_{003/104} | c/Å | a/Å | c/a | V/Å³ |
|---|---|---|---|---|---|---|---|
| Example 1 | 18.620 | 0.101 | 1.670 | 14.268 | 2.876 | 4.961 | 102.32 |
| Example 2 | 18.618 | 0.103 | 1.681 | 14.270 | 2.877 | 4.960 | 102.33 |
| Comparative Example 1 | 18.617 | 0.121 | 1.425 | 14.240 | 2.873 | 4.955 | 102.15 |

It can be seen from the refined XRD results shown in Table 3-1 that after the cycling, the intensities of I_{003/104} of samples of Examples 1 and 2 are greater than that of Comparative Example 1. This is because the coated phosphate salt and carbon nitride compound isolate the electrode from the electrolyte liquid, thereby reducing the corrosion of the material by HF, and inhibiting the surface lattice reconstruction due to the corrosion. This helps to decrease the degree of Li⁺/Ni²⁺ mixing and makes the layer structure of the material more ordered and intact, thereby improving the structural stability of the cathode active material. In addition, the values of the lattice parameters c, a, c/a, and the cell volume are all increased. This is because the coated phosphorus atoms can form chemical bonding with Ni on surface of the material, thereby stabilizing the Ni⁴⁺ state on the surface in the full charged state, which in turn further improves the structural stability of the cathode active material.

### 4. Performance Test

### 4.1 Cycling and Rate Performances at High and Low Temperatures

The materials obtained from the examples and comparative examples were subjected to cycling and rate performance tests at 25°C and 45°C, respectively. The testing method was as follows. The materials obtained from the examples and comparative examples were respectively weighted in appropriate amounts and assembled into button cells, in which the mass ratio of the electrode material to the conductive carbon black was 90:10, the solvent was NMP, the area density of the electrode plate was 1.2mg/cm². At the voltage of 2.8 to 4.4V and 25°C, the button cells were subjected to one charging-discharging cycle at a rate of 0.1C/0.1C, and then charged and discharged at rates of 0.1C/1C, 0.2C/1C, 0.5C/1C, and 1C/1C, respectively. Thereafter, the button cells were subjected to the cycle performance tests (50 cycles) at a rate of 1C/1C at 25°C and 45°C, respectively. The test results are shown in Table 4-1 below.

**Table 4-1**

| Sample source | Charge capacity at 0.1C (mAh/g) | Discharge capacity at 0.1C (mAh/g) | Retention rate after 50 cycles at 25°C (%) | Retention rate after 50 cycles at 55°C (%) | Discharge capacity at 0.2C (mAh/g) | Discharge capacity at 0.5C (mAh/g) | Discharge capacity at 1C (mAh/g) |
|---|---|---|---|---|---|---|---|
| Comparative Example 1 | 206.5 | 188.4 | 90.35 | 89.40 | 183.2 | 175.9 | 172.3 |
| Comparative Example 2 | 207.3 | 189.3 | 93.56 | 91.78 | 183.8 | 175.5 | 174.2 |
| Comparative Example 3 | 207.7 | 189.7 | 93.65 | 92.16 | 184.3 | 176.9 | 173.8 |
| Comparative Example 4 | 207.4 | 189.6 | 94.02 | 92.25 | 184.2 | 178.8 | 174.2 |
| Example 1 | 209.1 | 192.6 | 97.86 | 96.67 | 188.3 | 183.2 | 178.3 |
| Example 2 | 209.3 | 192.3 | 97.91 | 96.54 | 187.9 | 183.4 | 178.3 |
| Example 3 | 209.5 | 192.6 | 98.11 | 96.49 | 188.5 | 183.5 | 178.6 |

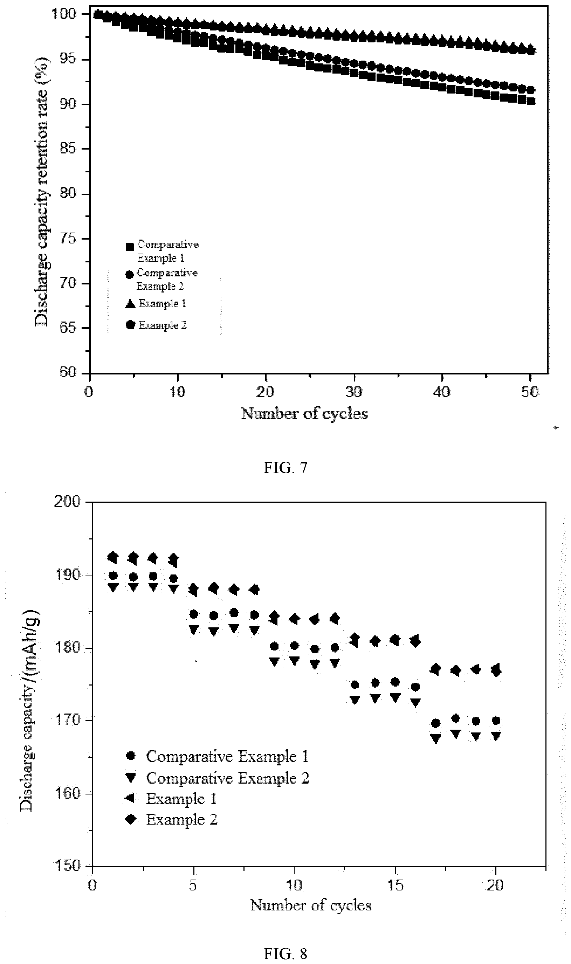

It can be seen from the data of Table 4-1 that, as compared to Comparative Example 1, the capacity and retention rate were not significant increased for the materials of Comparative Examples 2 to 4. It can be seen from the data of the examples that, as compared to the comparative examples, the charge and discharge capacities of the cells prepared with the materials obtained in the examples of the present application were increased by about 2 to 5 mAh/g, and the rate performances of the cells were also significantly improved. In addition, the cycling and rate performances at 45° C were significantly improved (see the comparison shown in FIGS. 7 and 8). The above suggests that the structures of the materials obtained in the examples of the present application can form an effective and stable interfacial layer which can reduce the interfacial reaction of the electrode with the electrolyte liquid. In addition, the coating layer has a high lithium ion conductivity and lithium ion lithium storage function, which makes the initial discharge capacity and the rate performance of the materials significantly improved.

### 4.2 Transition metal dissolution test

The cathode materials obtained from the examples and comparative examples were respectively weighted in appropriate amounts and assembled into button cells. The cells were stored in a fully charged state (4.4 V) at 60°C for 30 days and 60 days, respectively, and then disassembled. The cathode plates were washed with DMC, air dried, and scraped off the active material layers therefrom. The active material layers were heated and dissolved in aqua regia. The solutions were subjected to ICP to measure the contents of Ni, Co, and Mn. The measured results are shown in Table 4-2.

**Table 4-2 Dissolution amounts of metals Ni, Co, and Mn**

| Sample source | Dissolution amount of Ni after storing for 30 days (ppm) | Dissolution amount of Co after storing for 30 days (ppm) | Dissolution amount of Mn after storing for 30 days (ppm) | Dissolution amount of Ni after storing for 60 days (ppm) | Dissolution amount of Co after storing for 60 days (ppm) | Dissolution amount of Mn after storing for 60 days (ppm) |
|---|---|---|---|---|---|---|
| Comparative Example 1 | 17532 | 8011 | 6940 | 22255 | 10245 | 9722 |
| Comparative Example 2 | 7201 | 3836 | 3619 | 13421 | 6734 | 6132 |
| Comparative Example 3 | 7421 | 3719 | 3612 | 13024 | 6289 | 6365 |
| Comparative Example 4 | 4012 | 1949 | 2226 | 6208 | 3122 | 3259 |
| Example 1 | 842 | 512 | 547 | 1369 | 663 | 635 |
| Example 2 | 854 | 368 | 421 | 1278 | 576 | 521 |
| Example 3 | 862 | 401 | 387 | 1109 | 532 | 574 |

It can be seen from date of Table 4-2 that after a long-term storage, the metal dissolution amounts for the materials obtained in the examples of the present application are significantly smaller than those of the comparative examples. This suggests that the materials obtained in the examples of the present application are resistant to corrosion by HF, and can form an effective and stable interfacial layer, thereby preventing the dissolution of transition metal ions into the electrolyte liquid, reducing the interfacial reaction of the electrode with the electrolyte liquid, and improving the cycling performance of the battery.

The technical features of the above-mentioned embodiments and examples can be combined arbitrarily. In order to make the description concise, not all possible combinations of the technical features of the above embodiments and examples are described. However, as long as there is no contradiction in the combination of these technical features, the combinations should be considered as in the scope of the present application.

The above-described embodiments are only several implementations of the present application, and should not be construed as limiting the scope of the present application. It should be understood by those of ordinary skill in the art that various modifications and improvements can be made without departing from the concept of the present application, and all fall within the protection scope of the present application. In addition, it should be understood by those of ordinary skill in the art that various modifications and improvements can be made to the present application after reading the contents taught by the present application, and the equivalent form obtained also falls within the protection scope of the present application. It should also be understood that the technical solutions obtained by those skilled in the art through logical analysis, reasoning or limited experimentation on the basis of the technical solutions provided in the present application are within the protection scope of the appended claims of the present application. Therefore, the protection scope of the patent application shall be subject to the appended claims, and the specification and the accompanying drawings may be used to explain the contents of the claims.

## Claims

1. A core-shell structured cathode material, comprising a core and an outer coating layer disposed on a surface of the core, wherein outward from the core, the outer coating layer sequentially comprises an electrolyte layer and a reinforcement layer;
the core is made of a material comprising a ternary cathode active material;
the electrolyte layer comprises a metal phosphate salt having a formula of LiₐM1_{b}M2_{c}(PO₄)₃, wherein 0<a<10, 0≤b<10, 0≤c<10, and M1 and M2 are different from each other and each independently selected from Y, Ni, Co, Mn, Zr, Bi, Zn, La, Al, Ti, Ge, W, or Sr; and
the reinforcement layer comprises a carbon nitride having a formula of CⱼNₖ, wherein 0<j<5, and 0<k<5.

2. The core-shell structured cathode material according to claim 1, wherein the reinforcement layer has a porous structure.

3. The core-shell structured cathode material according to claim 1 or 2, wherein the ternary cathode active material is selected from the group consisting of lithium nickel cobalt manganese oxide, lithium nickel cobalt aluminum oxide, and any combination thereof.

4. The core-shell structured cathode material according to any one of claims 1 to 3, wherein the core has a diameter of 4 µm to 15 µm.

5. The core-shell structured cathode material according to any one of claims 1 to 4, wherein the electrolyte layer has a thickness of 5 nm to 50 nm.

6. The core-shell structured cathode material according to any one of claims 1 to 5, wherein the reinforcement layer has a thickness of 5 nm to 100 nm.

7. The core-shell structured cathode material according to any one of claims 1 to 6, comprising one or more of the following features:
(1) the outer coating layer has a total thickness of 10 nm to 100 nm;
(2) 0<a<5, 0<b<5, and 0<c<5;
(3) M1 and M2 are different from each other and each independently selected from Y, Co, Zr, Bi, La, Al, Ti, or W;
(4) 0<j<3, and 0<k<4.

8. A preparation method of a core-shell structured cathode material, comprising steps of:
mixing and dispersing a core material in form of particles, a phosphate salt, and water to obtain a base liquid;
adding a metal salt solution to the base liquid and mixing to obtain a precipitate, and drying the precipitate to obtain a pre-coated powder; and
mixing the pre-coated powder, a lithium salt, a carbon source, and an nitrogen source, and heating at 200°C to 800°C to obtain the core-shell structured cathode material;
wherein the core-shell structured cathode material comprises a core and an outer coating layer disposed on a surface of the core, and outward from the core, the outer coating layer sequentially comprises an electrolyte layer and a reinforcement layer;
the core material comprises a ternary cathode active material;
the electrolyte layer comprises a metal phosphate salt having a formula of LiₐM1_{b}M2_{c}(PO₄)₃, wherein 0<a<10, 0≤b<10, 0≤c<10, and M1 and M2 are different from each other and each independently selected from Y, Ni, Co, Mn, Zr, Bi, Zn, La, Al, Ti, Ge, W, or Sr; and
the reinforcement layer comprises a carbon nitride having a formula of CⱼNₖ, wherein 0<j<5, and 0<k<5.

9. The preparation method according to claim 8, wherein a mass ratio of the core material to the phosphate salt is (1000 to 100): 1.

10. The preparation method according to claim 8 or 9, wherein the metal salt solution comprises a M1 salt and a M2 salt, and a mass ratio of the core material to the M1 salt to the M2 salt is 1:(0.0001 to 0.01):(0.001 to 0.01).

11. The preparation method according to any one of claims 8 to 10, wherein a mass ratio of the core material to the nitrogen source is 1 :(0.0005 to 0.5).

12. The preparation method according to any one of claims 8 to 11, wherein a molar concentration of phosphate anions in the base liquid is 0.001 mol/L to 0.1 mol/L; and a total molar concentration of metal cations in the metal salt solution is 0.001 mol/L to 0.1 mol/L.

13. The preparation method according to any one of claims 8 to 12, comprising one or more of the following features:
(1) the phosphate salt comprises one or more of ammonium dihydrogen phosphate, diammonium hydrogen phosphate, sodium dihydrogen phosphate, or potassium dihydrogen phosphate;
(2) the lithium salt comprises one or more of lithium carbonate, lithium hydroxide, or lithium acetate;
(3) the nitrogen source comprises one or more of urea, uric acid, or ammonium fluoride; and
(4) the carbon source comprises one or more of urea, uric acid, glucose, caramel, or bitumen.

14. A battery cathode, wherein an active material of the battery cathode is the core-shell structured cathode material according to any one of claims 1 to 7, or the core-shell structured cathode material prepared by the preparation method according to any one of claims 8 to 13.

15. A secondary battery, comprising the battery cathode according to claim 14, a separator, an anode, and an electrolyte liquid.

16. An electrical device, comprising the secondary battery according to claim 15.
